# FASCICULE DE BREVET EUROPEEN

(11) **EP 2 834 395 B1**
(45) Date de publication et mention de la délivrance du brevet: **20.04.2016**
(21) Numéro de dépôt: 13713863.2
(22) Date de dépôt: 29.03.2013
(51) Int. Cl.: C25D 5/00, C25D 7/06, C25D 7/10, B24B 1/00, B24B 27/06

(54) **PROCÉDÉ ET APPAREIL DE FABRICATION D'UN FIL DE DECOUPE**
VERFAHREN UND VORRICHTUNG ZUR HERSTELLUNG VON DRAHTSÄGEN
PROCESS AND APPARATUS FOR MANUFACTURING A CUTTING WIRE

(30) Priorité: 02.04.2012 FR 1253017
(43) Date de publication de la demande: 11.02.2015
(73) Titulaire: Commissariat à l'Énergie Atomique et aux Énergies Alternatives, 75015 Paris (FR); THERMOCOMPACT, 74370 Metz Tessy (FR); Centre National de la Recherche Scientifique, 75016 Paris (FR)
(72) Inventeur: SANCHEZ, Gérald, F-74230 Dingy Saint Clair (FR); LY, Michel, F-74000 Annecy (FR); RIVOIRARD, Sophie, F-38250 Lans En Vercors (FR); GRIFFOND, Arnaud, F-38400 Saint Martin D'heres (FR)
(74) Mandataire: GIE Innovation Competence Group
(86) Numéro de dépôt international: PCT/EP2013/056817
(87) Numéro de publication internationale: WO 2013/149965

(56) Documents cités:
- EP-A2- 2 428 317
- JP-A- 2004 009 238
- JP-A- 2004 050 301

## Description

L'invention concerne un procédé et un appareil de fabrication d'un fil de découpe ainsi que le fil fabriqué par ce procédé.

Les procédés connus de fabrication d'un fil de découpe comportent :
a) le dépôt de particules abrasives magnétiques sur l'âme centrale, chaque particule abrasive magnétique comportant un matériau magnétique dont la perméabilité relative est supérieure à 50, ce matériau magnétique représentant au moins 1 % du volume de la particule abrasive magnétique, et
b) le dépôt du liant sur l'âme centrale pour maintenir les particules abrasives fixées sur cette âme centrale.

Dans des procédés connus, les particules abrasives magnétiques comportent un revêtement en matériau métallique magnétique pour faciliter l'adhésion du liant sur ces particules. Par exemple, la demande WO2011042931A1 décrit à cet effet des particules abrasives magnétiques ayant un revêtement métallique tel que du nickel.

Dans d'autres procédés connus, une interaction magnétique est en plus créée, pendant l'étape de dépôt des particules abrasives magnétiques, entre l'âme centrale et les particules abrasives magnétiques pour attirer les particules abrasives magnétiques sur l'âme centrale. Par exemple de tels procédés sont divulgués dans EP2 428 317 A2, JP2004 050301 A et JP2004 009238 A. Ceci permet notamment d'accélérer le dépôt des particules abrasives sur l'âme et donc d'accélérer la fabrication du fil de découpe.

A ce jour, il a été essayé de créer une induction magnétique permanente soit dans la direction longitudinale de l'âme soit dans une seule direction radiale de l'âme. Il s'est révélé que l'induction magnétique dans la direction longitudinale n'est pas très efficace pour attirer rapidement les particules abrasives magnétiques sur l'âme centrale de sorte que la fabrication du fil de découpe n'est pas vraiment plus rapide. Il a aussi été constaté que créer une induction magnétique dans une direction radiale conduit à une répartition très inhomogène des particules abrasives magnétiques sur la périphérie de l'âme. En effet, celles-ci se concentrent essentiellement sur le pôle sud et le pôle nord de l'âme centrale laissant entre ces deux pôles des zones quasiment dépourvues de particules abrasives magnétiques. Ainsi, dans ce dernier cas, le gain en productivité est obtenu au détriment de l'homogénéité de la répartition des particules abrasives magnétiques à la surface de l'âme centrale.

Aujourd'hui, il est donc souhaitable de rendre plus rapide les procédés connus de fabrication tout en conservant une répartition aussi homogène que possible des particules à la surface de l'âme centrale.

L'invention a donc pour objet un procédé de fabrication d'un fil de découpe conforme à la revendication 1.

Dans le procédé ci-dessus de fabrication, pendant l'étape de dépôt, les particules abrasives magnétiques sont attirées par l'âme centrale par une force d'attraction magnétique créée par une induction magnétique radiale. Cela accélère le dépôt des particules abrasives magnétiques sur l'âme centrale. Puisque le dépôt des particules abrasives magnétiques sur l'âme centrale est accéléré, le procédé ci-dessus de fabrication est plus rapide.

De plus, aimanter l'âme centrale avec plusieurs pôles sud et plusieurs pôles nord répartis sur la périphérie de l'âme centrale et/ou dans la longueur de l'âme centrale permet de positionner plus régulièrement (pôles répartis autour du fil) et/ou avec plus de densité (pôles répartis longitudinalement) les particules abrasives magnétiques. Ainsi, il est possible, en même temps, d'accélérer le dépôt des particules abrasives magnétiques sur l'âme et d'uniformiser la distribution des particules abrasives magnétiques sur l'âme. Dès lors, le gain en productivité obtenu grâce à un dépôt plus rapide des particules abrasives sur l'âme peut être obtenu en limitant la détérioration de l'uniformité de la répartition des particules à la surface de l'âme.

Le fait de créer l'induction magnétique avant le dépôt des particules abrasives magnétiques permet aussi d'éviter ou de limiter le recours à un champ magnétique externe lors du dépôt des particules abrasives magnétiques. En effet, la présence d'un champ magnétique externe pendant le dépôt aimante les particules abrasives magnétiques. Si cette aimantation est trop forte par rapport à l'agitation du bain d'électrolyse, alors elles ont tendance à s'agglomérer pour former des amas de particules abrasives. La présence de tels amas dans le bain d'électrolyte n'est pas souhaitable.

La densité des particules abrasives magnétiques à la surface de l'âme centrale est également accrue.

Les modes de réalisations de ce procédé peuvent comporter une ou plusieurs des caractéristiques des revendications dépendantes de procédé.

Ces modes de réalisation du procédé présentent en outre les avantages suivants :
- aimanter les particules abrasives magnétiques peut éviter le recours à un champ magnétique extérieur pour attirer ces particules sur l'âme centrale ;
- aimanter de façon permanente l'âme centrale limite l'agglomération des particules abrasives magnétiques entre elles et peut aussi éviter d'avoir recours à un champ magnétique extérieur pour former une source de champ magnétique capable d'attirer les particules abrasives magnétiques sur l'âme centrale ;
- l'utilisation d'une âme centrale aimantée parallèlement à son axe entraîne l'apparition en surface de cette âme centrale d'une induction magnétique permanente radiale supérieure à 0,1 mT répartie sur toute sa circonférence, ce qui permet d'accroître l'uniformité de la répartition des particules abrasives magnétiques sur la périphérie de cette âme centrale ;

- l'application successive d'un premier et d'un second champs magnétiques externes générant des moments magnétiques différents dans l'âme centrale permet d'accroître l'uniformité de la répartition des particules abrasives magnétiques sur la périphérie de cette âme centrale ;
- faire circuler un courant dans l'âme centrale permet de créer un champ magnétique uniforme sur toute la périphérie de l'âme centrale et donc d'accroître l'uniformité de la répartition des particules abrasives magnétiques sur cette périphérie ;
- réitérer plusieurs fois les étapes a) et b) permet d'obtenir un fil multicouches dont la durée d'utilisation est accrue ;
- déposer des particules abrasives magnétiques aimantées avant le dépôt du liant permet d'obtenir une répartition uniforme des particules abrasives magnétiques sur la périphérie de l'âme centrale.

L'invention concerne également un appareil de fabrication d'un fil de découpe conforme à la revendication 10.

Enfin, l'invention a également pour objet un fil de découpe conforme à la revendication 11.

Les modes de réalisation de ce fil peuvent comporter une ou plusieurs des caractéristiques des revendications dépendantes de fil.

L'invention sera mieux comprise à la lecture de la description qui va suivre, donnée uniquement à titre d'exemple non limitatif et faite en se référant aux dessins sur lesquels :
- la figure 1 est une illustration schématique d'un appareil de fabrication d'un fil de découpe,
- la figure 2 est une illustration en coupe transversale du fil de découpe fabriqué à l'aide de l'appareil de la figure 1 ;
- la figure 3 est une illustration schématique en coupe transversale d'une particule abrasive magnétique du fil de la figure 2 ;
- les figures 4, 5 et 7 sont des illustrations schématiques de différents modes de réalisation d'un dispositif d'aimantation d'une âme centrale du fil de la figure 2 ;
- la figure 6 est une illustration schématique d'une section de l'âme centrale du fil de la figure 2 aimantée à l'aide du dispositif de la figure 5 ;
- les figures 8 et 9 sont des illustrations schématiques d'un autre dispositif d'aimantation de l'âme centrale et des particules abrasives magnétiques du fil de la figure 2 ;
- la figure 10 est une illustration schématique d'un dispositif d'aimantation des particules abrasives magnétiques de la figure 3 ;
- la figure 11 est une illustration schématique d'un récipient contenant un bain d'électrolyte de l'appareil de la figure 1 ;
- les figures 12, 13 et 14 sont des illustrations schématiques en coupe transversale de différents modes de réalisation d'un jeu de buses utilisé dans le récipient de la figure 11 ;
- les figures 15, 16, 17 et 18 représentent différents modes de réalisation de la particule abrasive magnétique de la figure 3 ;
- la figure 19 est un organigramme d'un procédé de fabrication du fil de la figure 2 à l'aide de l'appareil de la figure 1 ;
- la figure 20 est un organigramme d'un autre procédé de fabrication du fil de la figure 2 ;
- la figure 21 est une illustration schématique d'un dernier mode de réalisation d'un dispositif d'aimantation d'une âme centrale du fil de la figure 2 ;
- la figure 22 est une illustration schématique d'une section de l'âme centrale du fil de la figure 2 aimantée à l'aide du dispositif de la figure 21.

Dans ces figures, les mêmes références sont utilisées pour désigner les mêmes éléments.

Dans la suite de cette description, les caractéristiques et fonctions bien connues de l'homme du métier ne sont pas décrites en détail.

Dans cette description, lorsque des valeurs de perméabilité relative d'un matériau magnétique sont données, elles le sont pour une fréquence nulle.

Les termes « Induction magnétique » et « aimantation » sont utilisés comme des synonymes. Les termes « induction magnétique rémanente » ou « rémanence magnétique » sont également utilisés comme des synonymes. Il s'agit de l'induction magnétique générée, en absence de champ magnétique extérieur, par un matériau magnétique qui a au préalable été aimanté. Dans ce cas, on dit également que le matériau magnétique présente une aimantation rémanente ou qu'il est aimanté de façon permanente.

Par la suite, par « aimanter », on désigne le fait qu'une pièce présente un moment magnétique non nul. L'aimantation de la pièce peut être permanente, c'est-à-dire persister même en absence de champ magnétique extérieur. On parle alors d'aimantation permanente. La pièce forme alors un aimant permanent si l'induction magnétique permanente à sa surface est supérieure à 0,1 mT à la température ambiante. Les matériaux utilisés pour réaliser un aimant permanent sont généralement des matériaux magnétiques durs. Par matériau magnétique dur, on désigne un matériau dont la coercitivité est supérieure à 5mT et, de préférence, supérieure à 10mT ou 50 mT. Généralement, il s'agit de matériaux comprenant une grande quantité de fer, de cobalt, de nickel et/ou de terres rares. Par grande quantité, on désigne par exemple le fait que plus de la moitié ou plus de 90% de la masse du matériau est composée d'un ou d'une combinaison de ces éléments.

L'aimantation de la pièce peut aussi disparaître dès que ce matériau magnétique n'est plus exposé à un champ magnétique extérieur. Cette pièce ne présente donc pas d'aimantation permanente. Ici, on considère qu'une pièce est désaimantée si son aimantation permanente est strictement inférieure à 0 ,1 mT et, typiquement, inférieure à 0,05 mT. Généralement, la pièce est alors réalisée dans un matériau magnétique doux, c'est-à-dire des matériaux dont la coercitivité est strictement inférieure à 1 mT.

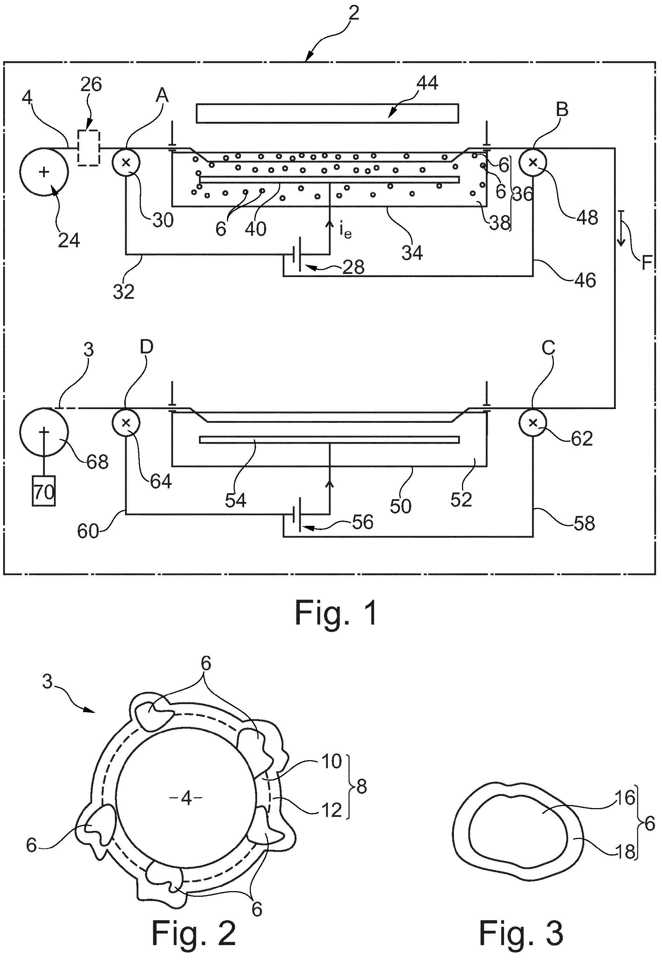

La figure 1 représente un appareil 2 de fabrication d'un fil 3 de découpe. Un fil de découpe est destiné à découper un matériau dur par frottement ou abrasion. Ici, on considère qu'un matériau est dur si sa microdureté sur l'échelle de Vickers est supérieure à 400 Hv50 ou supérieur ou égale à 4 sur l'échelle de Mohs. Dans cette description, les microduretés Vickers sont exprimées pour une charge de 50 gramme force, c'est-à-dire pour une force de 0,49N. Toutefois, l'homme du métier sait qu'il faut ajuster la charge en fonction de l'épaisseur du matériau sur lequel les mesures sont réalisées pour que la taille de l'empreinte Vickers soit inférieure à l'épaisseur du matériau. Ici, ce fil de découpe est destiné à découper du silicium monocristallin ou polycristallin ou encore du saphir ou du carbure de silicium.

Avant de décrire plus en détail l'appareil 2, le fil 3 fabriqué par cet appareil 2 est décrit en référence aux figures 2 et 3.

Le fil 3 comporte une âme centrale 4 sur la périphérie de laquelle sont fixées des particules abrasives magnétiques 6 maintenues sur l'âme centrale par un liant 8. Typiquement, l'âme centrale se présente sous la forme d'un fil simple présentant une résistance à la traction supérieure à 2 000 ou 3 000 MPa et, généralement, inférieure à 5 000 MPa.

L'allongement à la rupture de l'âme 4 est supérieur à 1 % et, de préférence, supérieur à 2 %. A l'inverse, l'allongement à la rupture de l'âme 4 ne doit pas être trop important et, par exemple, doit rester en dessous de 10 ou 5 %. L'allongement à la rupture représente ici l'augmentation de la longueur de l'âme 4 avant que celle-ci ne se rompe.

Dans ce mode de réalisation, l'âme 4 a une section transversale circulaire. Par exemple, le diamètre de l'âme 4 est compris entre 70 µm et 1 mm. Le diamètre de l'âme 4 dépend souvent du matériau que l'on souhaite découper. Par exemple, le diamètre de l'âme 4 est compris entre 200 et 450 µm ou 1 mm pour découper des lingots de silicium tandis qu'il est compris entre 70 et 100 ou 200 µm pour découper des tranches de silicium connues sous le terme anglais de « wafer ». Dans ce mode de réalisation, l'âme 4 est réalisée dans un matériau électriquement conducteur. On considère qu'un matériau est électriquement conducteur si sa résistivité est inférieure à 10⁻⁵ Ω.m à 20°C. Ici, l'âme 4 est également réalisée dans un matériau magnétique dont la perméabilité relative est supérieure à 50 et, de préférence, supérieure à 100 ou 200. Par exemple, l'âme 4 est réalisée en acier au carbone ou en acier inoxydable ferritique ou en acier laitonné. La masse linéique m de l'âme 6 est, par exemple, comprise entre 10mg/m et 500mg/m et, de préférence, entre 50mg/m et 200mg/m.

Les particules abrasives 6 forment des dents à la surface de l'âme 4 qui vont venir éroder le matériau à découper. Ces particules abrasives doivent donc être plus dures que le matériau à découper.

Le diamètre de ces particules 6 est compris ente 1 µm et 500 µm et inférieur au tiers du diamètre de l'âme 4. Ici, dans ce mode de réalisation, le diamètre des particules 6 est compris entre 10 et 22 µm pour une âme de diamètre 0,12mm. Lorsque ces particules 6 ne sont pas des sphères, le diamètre correspond au plus grand diamètre hydraulique de ces particules.

Le liant 8 a pour fonction de maintenir les particules abrasives 6 fixées sans aucun degré de liberté sur l'âme 4.

De préférence, le liant 8 est un liant métallique car ces liants sont plus durs que des résines et permettent donc de maintenir de façon plus efficace les particules abrasives sur l'âme 4. Ici, le liant est du nickel.

Dans ce mode de réalisation, le liant 8 est déposé en deux couches successives 10 et 12. L'épaisseur de la couche 10 est faible. Par exemple, elle est inférieure à la moitié du diamètre moyen des particules abrasives. Cette couche 10 permet juste de fixer faiblement les particules abrasives 6 sur l'âme centrale.

La couche 12 a une épaisseur plus importante. Par exemple, l'épaisseur de la couche 12, dans la direction radiale, est supérieure à 0,5 fois le diamètre moyen des particules abrasives. L'épaisseur de la couche 12 est généralement supérieure ou égale à 0,7 fois le diamètre moyen des particules abrasives 6. L'épaisseur de la couche 12 reste cependant classiquement inférieure ou égale au diamètre moyen des particules abrasives.

Cette couche 12 permet d'empêcher l'arrachement des particules abrasives 6 lorsque le fil 3 est utilisé pour découper une pièce.

La figure 3 représente plus en détail une particule 6 abrasive magnétique. Chaque particule abrasive 6 comporte un grain abrasif 16 réalisé dans un matériau plus dur que le matériau à scier. Par exemple, la dureté du grain abrasif 16 est supérieure à 430 Hv50 sur l'échelle de Vickers et, de préférence, supérieure ou égale à 1 000 Hv50. Sur l'échelle de Mohs, la dureté des grains 16 est supérieure à 7 ou 8. Par exemple, les grains 16 sont des grains de diamant.

Chaque grain 16 est recouvert d'un revêtement 18 en matériau magnétique dont la perméabilité relative est supérieure ou égale à 50 et, de préférence, supérieure ou égale à 100. Le matériau magnétique utilisé est par exemple un matériau ferromagnétique ou ferrimagnétique. Sa température de Curie est supérieure à la température atteinte lors d'un dépôt électrolytique des particules abrasives 6 sur l'âme 4. De préférence, le matériau est également un matériau électriquement conducteur pour faciliter la fixation des particules 6 par le liant 8 sur l'âme 4. Par exemple, le matériau utilisé est de préférence un matériau ferromagnétique comportant l'un des éléments suivants : du fer, du cobalt, du nickel ou un alliage de samarium-cobalt ou du Néodyme.

L'épaisseur du revêtement 18 est suffisante pour que le volume de matériau magnétique dans la particule abrasive 6 permette de soulever cette particule lorsqu'elle est placée dans un gradient d'induction magnétique de 30T/m et, de préférence, de 10T/m. Typiquement, pour cela, le volume du matériau magnétique représente plus de 1 % ou 5 % du volume de la particule abrasive 6. Par exemple, son épaisseur est comprise entre 0,5 et 100 % du diamètre du grain 16 de la particule abrasive 6 et, de préférence, entre 2 et 50 % du diamètre du grain 16 de la particule abrasive 6.

L'épaisseur est généralement supérieure à 0,05 et, de préférence, supérieure à 1 µm ou 2,5 µm pour obtenir un revêtement 18 recouvrant plus de 90 % de la surface extérieure du grain 16.

Le revêtement 18 est par exemple déposé sur le grain 7 par pulvérisation cathodique plus connue sur le terme anglais de « sputtering », par électrolyse, par dépôt chimique en phase vapeur (plus connu sur le terme anglais de CVD : « Chemical Vapor Deposition ») ou par électrolyse chimique sans courant.

A titre d'exemple, le revêtement 18 est ici du nickel. L'épaisseur du revêtement 18 est choisie de telle sorte qu'il représente plus de 10 % en masse et, de préférence, moins de 56 % en masse de la particule 6.

Sur la figure 1, le sens de déroulement de l'âme 4 est représenté par une flèche F. Par la suite, l'amont et l'aval sont définis par rapport au sens de la flèche F.

Les différents éléments de l'appareil 2 sont décrits dans l'ordre où ils sont rencontrés par l'âme 4 en suivant le sens de déroulement.

L'appareil 2 comporte une bobine 24 sur laquelle est enroulée l'âme 4 à revêtir des particules abrasives 6.

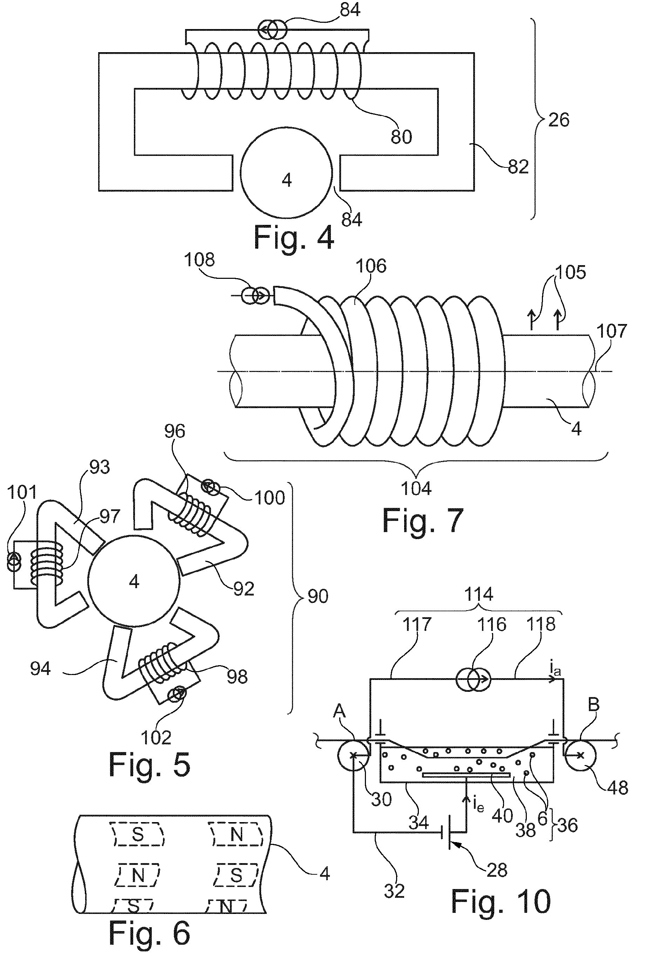

Ensuite, l'appareil 2 comporte éventuellement un dispositif 26 d'aimantation de l'âme centrale 4. Des modes de réalisation de ce dispositif sont décrits en référence aux figures 4 à 7 et 21.

Puis, l'âme 4 rencontre un point A de contact mécanique avec un conducteur électrique 32 raccordé électriquement à la borne négative d'une source 28 de tension continue. Par exemple, le point A est réalisé à l'aide d'une poulie conductrice 30 électriquement raccordée à la borne négative de la source 28 par le conducteur 32. Cette poulie 30 comporte typiquement une gorge à l'intérieur de laquelle frotte l'âme centrale 4 lorsque celle-ci est déroulée. Par exemple, la poulie 30 est montée libre en rotation autour d'un axe perpendiculaire à la direction longitudinale de l'âme 4.

La source 28 génère un courant d'électrolyse iₑ. Typiquement, la densité du courant d'électrolyse iₑ est supérieure à 5 A/dm² et, généralement, inférieure à 50 A/dm². La densité de courant est le rapport entre la l'intensité du courant iₑ est la surface de l'âme 4 immergée dans le bain d'électrolyte.

L'appareil 2 comporte un récipient 34 contenant un bain 36 d'électrolyte dans lequel est immergée l'âme 4.

Le bain 36 comprend un électrolyte 38 et les particules abrasives 6 dispersées dans cet électrolyte.

L'électrolyte 38 est typiquement une solution aqueuse, contenant des ions du liant 8 c'est-à-dire ici des ions Ni²⁺. Par exemple, il s'agit d'une solution connue sous le nom de « solution de Nickel de Watts ».

Une électrode 40 électriquement raccordée à la borne positive de la source 28 est également immergée dans le bain 36. Cette électrode forme donc une anode tandis que la partie de l'âme 4 immergée dans le bain 36 forme la cathode.

Typiquement, l'électrode 40 s'étend parallèlement à la direction longitudinale de l'âme 4.

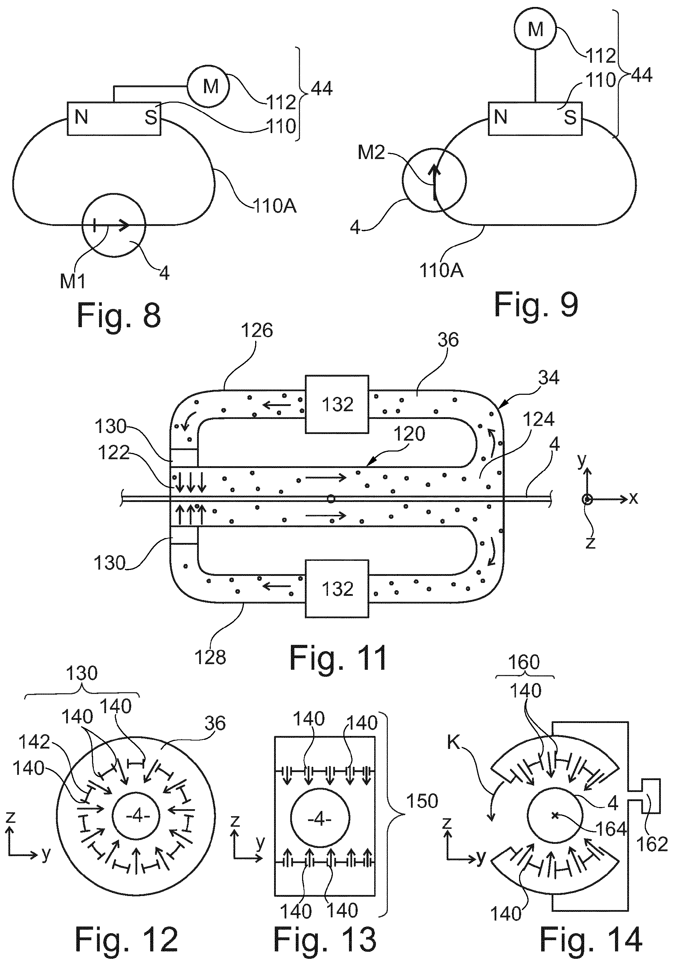

Éventuellement, à la place du dispositif 26 ou en plus du dispositif 26, un dispositif 44 d'aimantation des particules abrasives 6 et de l'âme 4 immergée dans le bain 36 est prévu à proximité de ce bain 36. Un mode de réalisation de ce dispositif 44 est décrit en référence aux figures 8 et 9.

En aval du bain 36, l'appareil 2 comprend un autre point B de contact mécanique entre l'âme 4 et un conducteur électrique 46. Le conducteur 46 est électriquement raccordé à la borne négative de la source 28. Le point de contact est par exemple réalisé à l'aide d'une poulie 48. Cette poulie 48 est typiquement identique à la poulie 30.

A la sortie du bain 36, l'âme centrale 4 est recouverte des particules abrasives 6 maintenues sur cette âme centrale par la couche 10. Pour renforcer l'adhésion des particules abrasives 6 sur l'âme centrale, l'appareil 2 comporte un second récipient 50 contenant un bain 52 d'électrolyte dans lequel est de nouveau immergée l'âme centrale 4 pour déposer la couche 12 de liant.

Le bain 52, contrairement au bain 36, est dépourvu de particules abrasives. Le bain 52 est essentiellement formé du liant 8 c'est-à-dire ici d'une solution comportant des ions Ni²⁺.

Le récipient 50 comporte une électrode 54 raccordée à la borne positive d'une source 56 de tension continue. Cette électrode 54 forme donc une anode.

La borne négative de la source 56 est raccordée à deux points de contact mécanique C et D entre l'âme centrale 4 et des conducteurs électriques 58 et 60. Ces points de contact C et D sont situés, respectivement, en amont et en aval du bain 52. Ils sont chacun réalisés à l'aide de poulies, respectivement 62 et 64. Ces poulies 62 et 64 sont par exemple identiques à la poulie 30.

A la sortie du bain 52, la couche 12 a été déposée.

Les pointillés en aval de la poulie 64 indiquent qu'éventuellement d'autres dispositifs peuvent être introduits dans l'appareil 2 pour appliquer des traitements supplémentaires au fil fabriqué. Ces traitements étant conventionnels, ceux-ci n'ont pas été représentés ici.

Enfin, le fil 3 est enroulé sur une bobine 68. La bobine 68 est entraînée en rotation par un moteur 70 pour tirer le fil à travers les bains d'électrolyte 36 et 52.

La figure 4 représente plus en détail un mode de réalisation possible du dispositif 26 d'aimantation de l'âme 4. Le dispositif 26 a pour fonction d'aimanter de façon permanente l'âme centrale de manière à ce que celle-ci présente un moment magnétique le long d'une direction radiale de l'âme 4. Cette aimantation permanente crée une induction magnétique permanente à la surface de l'âme 4 au moins supérieure à 0 ,1 mT ou 0,4 mT et, de préférence, supérieure à 0,5 mT ou 1 mT. Pour aimanter de façon permanente l'âme 4, le dispositif 26 applique un champ magnétique continu de forte intensité sur l'âme 4. Par induction magnétique de forte intensité, on désigne ici une induction magnétique dont l'intensité est supérieure à 0,1 T et, de préférence, supérieure à 0,5 ou 1 T. Par champ magnétique de forte intensité, on désigne un champ magnétique dont l'intensité est supérieure à 800A/m et, de préférence, supérieure à 4kA/m ou 8kA/m. Dans le cas du dispositif 26, ce champ magnétique de forte intensité est appliqué parallèlement à une direction radiale de l'âme 4.

A cet effet, le dispositif 26 comporte une bobine 80, dans laquelle circule un courant continu, enroulée autour d'un noyau magnétique 82. Les extrémités de la bobine 80 sont raccordées à une source de courant continu 84.

Le noyau 82 est en forme de « C ». Les extrémités de ce noyau 82 se resserrent l'une en face de l'autre pour former un entrefer 84. L'âme 4 traverse cet entrefer 84 au fur et à mesure qu'elle est déroulée dans le sens de déroulement. Le dispositif 26 crée donc un moment magnétique radial avec un seul pôle sud et un seul pôle nord diamétralement opposé sur la périphérie de l'âme centrale. Ce pôle nord et ce pôle sud s'étendent dans la direction longitudinale de l'âme centrale.

Le fait d'aimanter l'âme centrale de façon permanente permet d'attirer plus fortement et plus rapidement les particules abrasives sur cette âme centrale. De plus, et éventuellement, cela permet de se passer du dispositif 44 d'aimantation. Dans ce dernier cas, c'est l'âme centrale elle-même qui constitue la source d'induction magnétique apte à attirer les particules abrasives.

La figure 5 représente un dispositif 90 d'aimantation de l'âme centrale susceptible d'être utilisé à la place du dispositif 26. Ce dispositif 90 est apte à créer une alternance et à des emplacements prédéterminés, sur la périphérie de l'âme 4, de plusieurs pôles sud et plusieurs pôles nord. Par exemple, dans ce mode de réalisation, le dispositif 90 comporte trois noyaux magnétiques 92 à 94 en forme de « C » répartis autour de la périphérie de l'âme 4. Ici, ces noyaux 92 à 94 sont dans un même plan perpendiculaire à la direction longitudinale de l'âme 4. Les extrémités de chacun des noyaux sont tournées vers une portion respective de l'âme 4 et situées suffisamment à proximité de cette âme 4 pour que les lignes de champ de chacun des noyaux se rebouclent par l'intermédiaire de l'âme 4.

Le dispositif 90 comprend également des bobines 96 à 98 pour générer dans chacun des noyaux 92 à 94 un champ magnétique de forte intensité. Chaque bobine 96 à 98 est raccordée à une source de courant 100 à 102 respective.

La figure 6 représente la répartition des pôles sud et nord sur la périphérie de l'âme 4 créée à l'aide du dispositif 90. Sur cette figure, les carrés en pointillés autour d'un « S » représentent des pôles sud tandis que ces mêmes carrés en pointillés autour d'un « N » représentent un pôle nord. Pour obtenir la répartition des pôles sud et pôles nord représentée sur la figure 6, le sens du courant généré par les sources 100 à 102 a été inversé à intervalles de temps régulier. Ainsi, en plus d'obtenir une alternance de pôles sud et de pôles nord le long de la périphérie de l'âme 4, on obtient en même temps une alternance de pôles sud et de pôles nord dans la direction longitudinale de cette âme 4. La répartition de plusieurs pôles sud et pôles nord sur la périphérie de l'âme 4 permet de positionner plus régulièrement les particules abrasives le long de cette périphérie. La répartition de plusieurs pôles sud et pôles nord dans la direction longitudinale permet de contrôler plus précisément la densité des particules abrasives dans la direction longitudinale. De préférence, les pôles sud et les pôles nord sont uniformément répartis sur la périphérie de l'âme 4. De même, de préférence, les pôles sud et les pôles nord sont uniformément répartis dans la direction longitudinale de l'âme 4. Cela permet notamment d'homogénéiser la répartition des particules abrasives sur toutes la périphérie de l'âme 4.

La figure 7 représente un dispositif 104 d'aimantation de l'âme centrale 4. Ce dispositif 104 peut être utilisé en lieu et place du dispositif 26. Contrairement au dispositif précédemment décrit, ce dispositif 104 aimante l'âme centrale de façon permanente uniquement dans la direction longitudinale de l'âme 4. L'aimantation permanente de l'âme 4 dans sa direction longitudinale est alors typiquement supérieure à 1 ou 4mT. En effet, l'âme 4 ainsi aimantée présente sur sa surface une aimantation permanente dans la direction radiale dont l'intensité est supérieure à 0,1 ou 0,4 mT. Sur la figure 7, cette aimantation permanente radiale est représentée par des flèches 105.

De plus, cette aimantation radiale est assez uniformément répartie sur la périphérie de l'âme 4, ce qui favorise une répartition homogène des particules abrasives 6 sur toute la périphérie de cette âme 4.

Par exemple, le dispositif 104 comporte un solénoïde 106 enroulé autour d'un axe 107. Le solénoïde 106 est raccordé à une source 108 de courant continu pour générer un champ magnétique de forte intensité. L'âme 4 traverse le solénoïde 106 le long de l'axe 107 lorsqu'elle est déroulée.

Les figures 8 et 9 représentent plus en détail le dispositif 44 d'aimantation. Le dispositif 44 comporte plusieurs sources de champ magnétique continu. Chaque source de champ magnétique crée un moment magnétique dans l'âme 4 permettant d'attirer les particules abrasives sur celle-ci. Ici, les différentes sources de champ magnétique sont réalisées à l'aide d'un même groupe d'aimants permanents déplaçable entre une première position, représentée sur la figure 8 et une seconde position représentée sur la figure 9. Pour simplifier les figures 8 et 9, seul un aimant permanent 110 a été représenté. Cet aimant permanent génère une induction magnétique permanente supérieure à 0,1 T ou un champ magnétique supérieur à 800A/m ou 4kA/m ou 8kA/m.

Dans la première position, les lignes de champ 110A de l'aimant 110 traversent de part en part la section transversale de l'âme 4 de manière à ce que celle-ci présente un premier moment magnétique parallèle à une première direction radiale représentée sur la figure 8 par une flèche M1. Dans la seconde position représentée sur la figure 9, l'aimant 110 est déplacé dans une position telle que ses lignes de champ 110A traversent l'âme 4 de manière à ce que celle-ci présente un moment magnétique parallèle à une seconde direction radiale représentée par une flèche M2 sur cette figure 9. La direction M1 est décalée angulairement par rapport à la direction M2 d'un angle compris entre 20° et 160° et, de préférence, compris entre 75° et 115°. Ici, cet angle est égal à 90° à ±5° près.

Le dispositif 44 comporte ici un actionneur 112 apte à déplacer l'aimant 110 entre ses première et seconde positions.

La figure 10 représente un dispositif 114 d'aimantation, par l'âme 4, des particules abrasives 6 présentes dans le bain 36. Ce dispositif 114 peut être utilisé en plus ou à la place des dispositifs 26 et 44. Le dispositif 114 comprend une source de courant 116 raccordée électriquement aux points de contact A et B par, respectivement, des conducteurs électriques 117 et 118. Par exemple, le contact mécanique entre l'âme 4 et les conducteurs 117 et 118 est assuré via les poulies 30 et 48 précédemment décrites. La source 116 permet de faire circuler un courant continu iₐ d'aimantation. Le courant iₐ se superpose au courant iₑ d'électrolyse mais, contrairement à ce dernier, l'intensité de ce courant iₐ reste constante dans toute la portion de l'âme 4 immergée dans le bain 36. Ainsi, l'âme 4 génère une induction magnétique qui aimante les particules abrasives 6 de sorte que celles-ci sont ensuite attirées vers l'âme 4. Ainsi, dans ce mode de réalisation, c'est l'âme 4 qui forme la source d'induction magnétique qui attire les particules abrasives sur elle. Dans ce mode de réalisation, de préférence, le conducteur 46 est omis pour que le courant d'électrolyse iₑ et le courant d'aimantation iₐ s'additionnent à l'intérieur de l'âme 4.

La figure 11 représente plus en détail un mode de réalisation du récipient 34. Les différents aménagements de ce récipient permettent d'accélérer la vitesse à laquelle l'âme 4 se déplace dans le bain 36 sans diminuer ou en augmentant la quantité de particules abrasives déposées sur l'âme 4. Pour simplifier la figure 11, l'électrode 40 n'a pas été représentée.

Le récipient 34 comprend un conduit rectiligne 120 dans lequel circule le bain 36 parallèlement à une direction X. La direction X est parallèle à la direction longitudinale de l'âme 4 et dirigée dans le sens F. Cette direction X forme avec des directions Y et Z un repère orthogonal. Le sens de circulation du bain 36 dans le récipient 34 est représenté par des flèches. Le conduit 120 s'étend depuis une extrémité amont 122 jusqu'à une extrémité aval 124.

L'âme 4 traverse le conduit 120 depuis l'extrémité 122 jusqu'à l'extrémité 124 de manière à être immergée à l'intérieur du bain 36.

Le récipient 34 comprend également des conduits de retour pour ramener le bain 36 de l'extrémité 124 vers l'extrémité 122. Pour simplifier la figure 11, seuls deux conduits 126 et 128 de retour ont été représentés.

Les conduits 126 et 128 s'étendent entre les extrémités 122 et 124. Ils débouchent dans l'extrémité 122 au travers d'un jeu 130 de buses de projection. Les buses du jeu 130 forment des jets de bain 36 qui viennent heurter l'âme 4 avec une vitesse non nulle dans une direction radiale à l'âme 4. Typiquement, la composante radiale V₃ de cette vitesse est supérieure à V₁/2 ou 3V₁/4 ou égale à V₁, où V₁ est la vitesse de déplacement de l'âme 4 à l'intérieur du bain 36. De préférence, la composante V₃ est également inférieure à 1,5V₁. Si la composante V₃ de la vitesse est supérieure à 50% de la vitesse V₁, alors la quantité de particules abrasives approchant le fil, puis accrochées sur celui-ci, est suffisante. Si la composante V₃ est supérieure à 150% de la vitesse V₁, alors des turbulences sont créées, et malgré le grand nombre de particules approchant de l'âme, la quantité de particules accrochées sur l'âme n'est pas nécessairement accrue. Par exemple, la composante radiale de la vitesse de projection est supérieure à 1 m/min et, de préférence, supérieure à 10 ou 60 m/min. Le fait de projeter le bain 36 sur l'âme 4 dans une direction radiale permet d'augmenter la quantité de particules abrasives déposées sur cette âme 4 par rapport à une situation identique où de telles buses ne seraient pas utilisées.

L'appareil 2 comprend également un dispositif 132 pour faire avancer le bain 36 à une vitesse V₂ parallèle à la direction X dans le conduit 120. Ici, le dispositif 132 est par exemple formé de pompes d'aspiration du bain 36. Chacune de ces pompes étant montée dans l'un des conduits 126 et 128.

Le dispositif 132 est réglé pour que la vitesse V₂ du bain 36 parallèlement à la direction X dans le conduit 120 soit égale à la vitesse V₁ de l'âme 4 qui se déplace à l'intérieur du conduit 120. Ici, on considère que la vitesse V₂ est égale à la vitesse V₁ si celles-ci sont égales à ±5 m/min et, de préférence, à ±1 m/min ou 20 cm/min.

La vitesse V₂ du bain 36 est mesurée à 1 ou 2 mm de distance de la périphérie de l'âme 4 et à plus de 1 ou 2 mm des parois du conduit 120.

Typiquement, la vitesse V₁ est supérieure à 6 m/min ou 10 m/min et, de préférence, supérieure à 30 ou 50 m/min.

La figure 12 représente plus en détail le jeu 130 de buses en coupe transversale. Le jeu 130 comporte plusieurs buses 140 de projection du bain 36 sur l'âme 4. Chaque jet provoqué par une buse 140 est représenté par une flèche sur la figure 12. Dans ce mode de réalisation, les buses 140 sont uniformément réparties le long de la périphérie de l'âme 4. Cela permet de répartir plus uniformément les particules abrasives sur la périphérie de l'âme 4. Typiquement, l'extrémité des buses 140 est à moins de 5 mm et, de préférence, à moins de 1 mm de la périphérie de l'âme 4. Ici, les buses 140 sont par exemple des trous aménagés dans une paroi circulaire 142. Les buses 140 sont réparties le long d'une portion immergée de l'âme 4. Cette portion représente typiquement moins de la moitié ou du quart de la totalité de la longueur de l'âme 4 immergée dans le bain 36. La portion où se trouvent les buses 140 est en amont de la portion immergée de l'âme 4 dépourvue de buse.

La figure 13 représente un jeu 150 de buses qui peut être utilisé en lieu et place du jeu 130. Ce jeu 150 est identique au jeu 130 sauf que la répartition des buses 140 n'est pas uniforme le long de la périphérie de l'âme 4. Par exemple, ici, les buses 140 sont disposées uniquement dans un plan supérieur et un plan inférieur situés, respectivement, au-dessus et en dessous de l'âme 4.

La figure 14 représente un jeu 160 de buses susceptible d'être utilisé en lieu et place du jeu 130. Ce jeu 160 est identique au jeu 130 sauf que les buses 140 sont uniformément réparties uniquement en vis-à-vis de deux secteurs angulaires de l'âme 4 diamétralement opposés. Typiquement, chaque secteur angulaire s'étend sur plus 10° ou 25°. Ces deux secteurs angulaires sont séparés l'un de l'autre par des secteurs angulaires dépourvus de buse qui s'étendent, chacun, sur plus de 10° ou 25°. De plus, dans ce mode de réalisation, un actionneur 162 est prévu pour déplacer en rotation le jeu 160 autour d'un axe 164 parallèle à la direction X. Ici, l'axe 164 est confondu avec l'axe de l'âme 4. Une flèche K représente le sens de rotation des buses 140 autour de l'âme 4. Le jeu 160 permet de répartir les particules abrasives 6 sur un parcours hélicoïdal le long de la périphérie extérieure de l'âme 4.

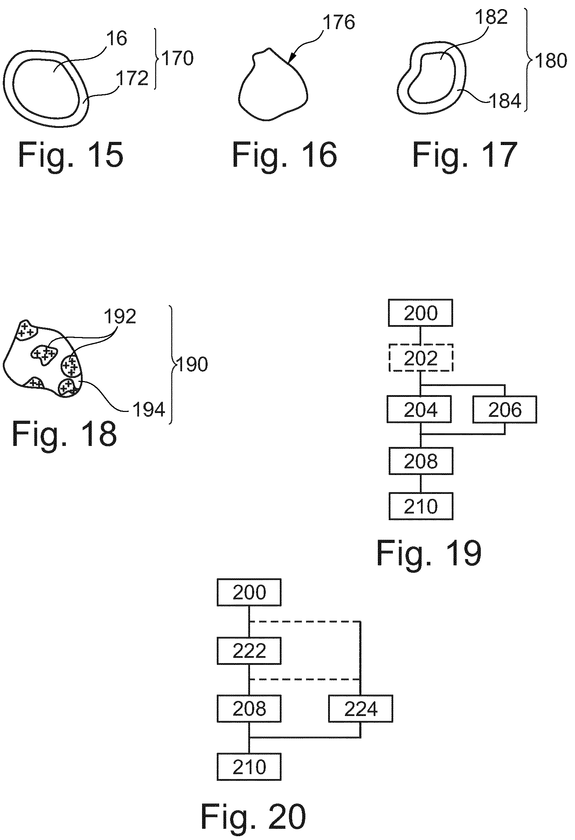

Les figures 15 à 18 représentent d'autres modes de réalisation possibles pour les particules abrasives 6. Par exemple, la figure 15 représente une particule abrasive 170 identique à la particule 6 sauf que le revêtement 18 est remplacé par un revêtement 172. Le revêtement 172 est identique au revêtement 18 sauf que celui-ci est aimanté de façon permanente de manière à présenter une induction magnétique permanente à sa surface supérieure ou égale à 0,1 ou 1 mT et, de préférence, supérieure ou égale à 5 mT dans une direction normale à sa surface. Lorsque la particule abrasive 170 est utilisée en lieu et place de la particule abrasive 6, les dispositifs d'aimantation 26, 44 et 114 peuvent être omis. C'est alors la particule 170 elle-même qui forme la source d'induction magnétique capable d'attirer cette particule sur l'âme 4. Ce qui vient d'être indiqué pour la particule 170 s'applique également aux autres modes de réalisation suivants de la particule abrasive.

La figure 16 représente une particule abrasive 176. La particule 176 est entièrement réalisée dans un matériau ferromagnétique ou ferrimagnétique plus dur que le matériau à couper. Par « entièrement réalisée », on désigne le fait que le matériau ferromagnétique ou ferrimagnétique représente plus de 90 % et, de préférence, plus de 95 ou 97 % de la masse de la particule abrasive. Dans ce mode de réalisation, il n'est pas nécessaire de recouvrir la particule abrasive d'un revêtement. Par exemple, le matériau ferromagnétique utilisé est le CrO₂ dont la dureté est supérieure à celle du silicium et qui conserve ses propriétés magnétiques jusqu'à une température de Curie d'environ 80°C.

La figure 17 représente une particule abrasive 180 formée d'un noyau magnétique 182 et revêtue d'un revêtement 184 formant une couche abrasive.

Enfin, la figure 18 représente une particule abrasive 190 formée de fragments 192 d'un matériau abrasif liés les uns aux autres par un matériau magnétique 194. Par exemple, les fragments sont des fragments de diamant, tandis que le matériau liant ces différents fragments entre eux pour former la particule 190 est du cobalt.

Le fonctionnement de l'appareil 2 va maintenant être décrit en référence au procédé de la figure 19. Lors d'une étape 200, l'âme 4 est déroulée de la bobine 24 par le moteur 70. Par exemple, l'âme 4 est déroulée à une vitesse supérieure à 6 m/min et, de préférence, supérieure à 10, 30, 40 ou 60 m/min. Chaque section de l'âme 4 se déplace et subit alors successivement les étapes suivantes.

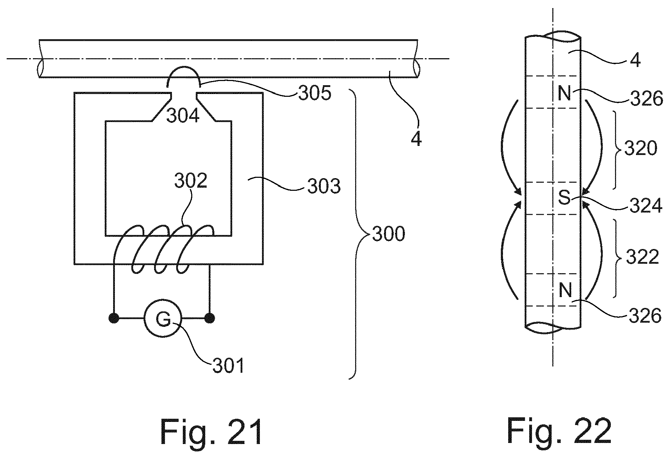

Éventuellement, lors d'une étape 202, l'âme centrale 4 est aimantée de façon permanente par le dispositif 26, 90, 104 ou celui de la figure 21.

Ensuite, lors d'une étape 204, les particules abrasives et le liant 8 sont déposés sur l'âme 4. Dans ce mode de réalisation, les particules abrasives 6 et la première couche 10 de liant sont déposées en même temps par électrolyse dans le récipient 34. A cet effet, lors de l'étape 204, la source 28 applique une différence de potentiels entre l'électrode 40 et la portion immergée de l'âme 4. En même temps, le dispositif 132 propulse le bain 36, à l'intérieur du conduit 120, parallèlement à l'âme 4, de manière à créer un courant d'électrolyte le long de l'âme 4 qui se déplace à une vitesse V₂ non nulle égale à la vitesse V₁ à plus ou moins 5 m/min près. Le fonctionnement du dispositif 132 entraîne également la projection par les buses 140 du bain 36 sur l'âme 4.

Éventuellement, en parallèle, lors d'une étape 206, les particules 206 présentent dans le bain 36 sont soumises à un champ magnétique extérieur pour les attirer sur l'âme 4. Lors de cette étape, le champ magnétique extérieur peut être créé par le dispositif 44. Dans ce cas, le champ magnétique extérieur aimante également l'âme centrale 4 et les particules abrasives 6. Typiquement, le dispositif 44 est mis en oeuvre si l'étape 202 n'a pas été mise en oeuvre. A l'inverse, si l'étape 202 est mise en oeuvre, de préférence, le dispositif 44 n'est pas mis en oeuvre.

Lors de l'étape 206, le champ magnétique extérieur peut aussi être créé par le dispositif 114. Le dispositif 114 peut être utilisé en plus des dispositifs 26, 90, 104, 44 ou 300 (Figure 21) ou à la place de ces dispositifs.

Lors de l'étape 206, les particules abrasives sont attirées vers l'âme centrale et maintenues sur l'âme centrale par la force d'attraction magnétique.

Ainsi, la présence d'une induction magnétique pour attirer les particules abrasives vers l'âme 4 :
- permet un dépôt plus rapide des particules abrasives sur l'âme 4, et
- rend plus difficile le décollement des particules 6 de l'âme 4 par les turbulences hydrodynamiques liées au déplacement de l'âme 4 dans le bain 36.

Lors d'une étape 208, la deuxième couche 12 de liant est déposée par électrolyse dans le bain 52.

Enfin, lors d'une étape 210, le fil 3 ainsi fabriqué est enroulé sur la bobine 68.

La figure 20 représente un autre mode de réalisation possible du procédé de fabrication du fil 3. Ce procédé est identique au procédé de la figure 19 sauf que l'étape 204 est omise et les étapes 202 et 206 sont remplacées par des étapes, respectivement 222 et 224.

Lors de l'étape 222, des particules abrasives aimantées sont déposées sur l'âme centrale en matériau magnétique. Les particules abrasives sont alors attirées vers l'âme centrale et maintenues sur l'âme centrale 4. L'étape 222 est réalisée avant que l'âme 4 soit immergée dans un bain d'électrolyte. L'étape 222, se poursuit directement par l'étape 208.

Lors de l'étape 224, un champ magnétique extérieur est appliqué pour maintenir les particules abrasives sur l'âme centrale. Ce champ magnétique extérieur est par exemple appliqué à l'aide du dispositif 44 mais sans nécessairement déplacer l'aimant 110. Cette étape 224 peut débuter en même temps que l'étape 222 ou juste à la fin de l'étape 222. Idéalement, l'étape de 224 se prolonge jusqu'à ce que les particules abrasives soient fixées sur l'âme 4 par le liant. Par exemple, l'étape 224 se prolonge jusqu'à la fin de l'étape 208. Cette façon de réaliser le fil 3 permet d'obtenir une répartition uniforme des particules sur la périphérie de l'âme 4.

La figure 21 représente un dispositif 300 d'aimantation de l'âme centrale 4. Ce dispositif 300 remplace, par exemple, le dispositif 26, 90 ou 104. Il permet d'aimanter l'âme 4 pour qu'elle présente une alternance de pôles sud et de pôles nord dans sa direction longitudinale à des emplacements prédéterminés. Il comporte un générateur 301 qui délivre un courant périodique dans un bobinage 302. Par exemple, le générateur 301 inverse le sens du courant à chaque instant t₀. De préférence, ces instants t₀ sont régulièrement répartis dans le temps. Par exemple, entre deux instants t₀ successif, l'intensité du courant reste constante. La durée du pallier d'intensité du courant ainsi obtenu entre deux instants t₀ successifs est, par exemple, deux ou dix fois plus longue que la durée nécessaire pour passer d'un palier au suivant lors du changement de sens du courant.

Le bobinage 302 transforme le courant en un champ magnétique ayant la même forme d'onde. Ce champ magnétique est concentré à l'intérieur d'un noyau magnétique 303 autour duquel le bobinage 302 est enroulé. Le noyau magnétique 303 forme un circuit magnétique fermé comportant un entrefer 304. L'entrefer est traversé par un flux magnétique principal et contourné par un flux magnétique secondaire ou de fuite. Ce flux magnétique secondaire passe à l'extérieur de l'entrefer 304. Une ligne de champ 305 de ce flux magnétique secondaire est représentée sur la figure 21. L'entrefer 304 est placé à proximité de l'âme 4 pour que le flux magnétique secondaire se reboucle par l'intermédiaire de l'âme 4. Par contre, l'âme 4 n'est pas placée à l'intérieur de l'entrefer. Plus précisément, les lignes de champs du flux magnétique secondaire s'étendent, à l'intérieur de l'âme 4, essentiellement le long de la direction longitudinale de l'âme 4.

Lorsque le dispositif 300 fonctionne, l'âme 4 avance toujours dans le même sens parallèlement à sa direction longitudinale. Le dispositif 300 applique alors un champ magnétique parallèle à la direction longitudinale de l'âme 4 tantôt dans un sens tantôt dans le sens opposé alors que l'âme 4 se déplace par rapport au dispositif 300.

Comme cela va maintenant être expliqué en référence à la figure 22, le dispositif 300 permet d'aimanter, en alternance, l'âme 4 qui défile dans le flux magnétique secondaire, dans un sens et dans le sens opposé. Les déposants estiment qu'en procédant ainsi, on crée en surface de l'âme 4 des domaines ou zones 320, 322 où la direction d'aimantation est uniforme. Ces domaines 320, 322 se succèdent les uns après les autres dans la longueur de l'âme 4. Deux domaines 320, 322 immédiatement consécutifs ont des directions d'aimantation différentes et, généralement, opposées. Entre ces deux domaines 320, 322 immédiatement consécutifs il existe donc une discontinuité de la direction d'aimantation. Il a été mesuré qu'au niveau de chacune de ces discontinuités, il existe un champ magnétique « de fuite » qui sort radialement de l'âme centrale. On observe donc au niveau de chacune de ces discontinuités un pic d'induction. Ce champ magnétique « de fuite » sort tantôt dans un sens tantôt dans le sens opposé ce qui crée une alternance de pôles sud 324 et de pôles nord 326 à la surface de l'âme 4. Quelques lignes de champs entre ces pôles sud 324 et nord 326 sont représentées par des flèches sur la figure 22. Les pôles sud et nord sont ici de forme annulaire et s'étendent sur toute la périphérie de l'âme 4.

En pratique l'utilisation du dispositif 300 s'est avérée plus efficace que l'utilisation du dispositif 104 pour attirer les particules abrasives magnétiques sur l'âme 4.

L'utilisation d'une induction magnétique pour attirer les particules abrasives 6 sur l'âme 4 laisse des traces caractéristiques sur le fil 3 ainsi fabriqué. En effet, l'utilisation de l'induction magnétique induit une organisation spécifique des particules abrasives sur l'âme centrale qui n'existe pas en cas d'absence d'utilisation de cette induction magnétique. Cette organisation spécifique dépend du dispositif d'aimantation utilisé. Par exemple, si certaines des particules abrasives sont oblongues et présentent leur plus grande longueur le long d'un grand axe, il a été constaté que lorsque l'âme centrale ou les particules abrasives sont aimantées par un dispositif tel que les dispositifs 26, 44, 104 ou 300 et peut être 114, le grand axe des particules oblongues se rapproche de la normale de la surface de l'âme centrale. Typiquement, pour au moins 55% des particules oblongues et, généralement, pour plus de 80 ou 90% des particules oblongues, l'angle entre leur grand axe et la normale à la surface de l'âme centrale passant par cette particule est inférieur à 70° ou 45° ou 30°. En d'autre terme, une pointe des particules oblongues est dirigée vers l'âme tandis que la pointe opposée est dirigée vers l'extérieur du fil. Cela favorise l'érosion du matériau à découper car c'est la pointe des particules oblongue qui fait saillie sur la face extérieure du fil de découpe plutôt que ses flancs. Pour cette raison, dans certains modes de réalisation, au moins 10% et, généralement, au moins 30% ou 50% au 80%, des particules abrasives sont des particules oblongues. De préférence, le rapport de forme des particules oblongues est supérieur à 1,5 ou 2 ou 4. Le rapport de forme est ici défini comme étant la longueur de la particule abrasive oblongue le long de son plus grand axe divisé par sa largeur. La largeur de la particule est mesurée le long d'un plus petit axe. Le plus petit axe est perpendiculaire au plus grand axe et coupe le plus grand axe à mi-distance entre les extrémités les plus éloignées de la particule situées sur ce grand axe. Parmi la multitude de petits axes possibles répartis sur une portion angulaire de 180°, celui utilisé pour mesurer la largeur est celui qui donne la plus petite valeur pour la largeur.

Si les particules abrasives sont attirées et maintenues par aimantation sur l'âme centrale avant d'être immergées dans le bain d'électrolyte, alors plus de 70 ou 85% des particules abrasives sont directement en contact mécanique avec l'âme centrale dans le fil de découpe ainsi fabriqué. Une telle organisation des particules abrasives ne se rencontre pas lorsque les particules abrasives sont déposées à l'aide du bain 36 sans application d'une induction magnétique. En effet, dans ce dernier cas, il existe une portion substantielle de particules abrasives qui se fixe tardivement sur l'âme centrale. Les particules fixées tardivement sont alors plus éloignées de l'âme centrale que les particules fixées en premier. Aujourd'hui, il ne semble pas qu'il existe d'autre moyen que l'application d'une induction magnétique pour fixer et retenir efficacement les particules abrasives sur l'âme centrale avant de les plonger dans le bain d'électrolyte. Ainsi, la disposition précédemment décrite des particules abrasives est aussi caractéristique de l'utilisation d'une aimantation pour attirer les particules sur l'âme centrale avant le dépôt du liant. Si l'âme centrale est déjà revêtue d'une couche d'accroche avant que les particules abrasives soient attirées et maintenues par aimantation sur l'âme centrale, alors ce qui vient d'être dit précédemment reste vrai sauf que 70 à 85% des particules abrasives sont directement en contact avec cette couche d'accroche et non plus directement en contact mécanique avec l'âme centrale. Dans le cas où l'âme centrale présente un moment magnétique radial, la densité de particules abrasives peut être plus importante à proximité des pôles magnétiques créés sur l'âme 4.

De plus, si l'induction magnétique est appliquée pendant le dépôt électrolytique, cela peut aussi conduire à une organisation spécifique des molécules du liant 8 sur l'âme 4. En particulier, dans le cas où l'âme 4 utilisée présente une alternance de plusieurs pôles sud et nord, cette alternance de pôles peut conduire à une alternance correspondante d'organisations spécifiques de ces molécules de liant 8. Par exemple, l'organisation spécifique peut être une orientation des cristaux du liant. L'orientation des cristaux peut être mesurée à l'aide d'un microscope électronique à balayage, par diffraction d'électrons rétrodiffusés. Cette technique est connue sous l'acronyme EBSD (« Electron Backscatter Diffraction »)

Enfin, si l'âme 4 ou les particules 6 sont aimantés de façon permanente pendant la fabrication du fil 3, le fil 3 ainsi fabriqué présente une aimantation permanente de l'âme ou des particules abrasives si le fil n'est pas volontairement désaimanté avant d'être commercialisé. Toutefois, les lignes de champs tendent à rester dans la couche de liant. Ainsi, l'induction magnétique mesurable sur le fil 3 peut être très inférieure à celle mesurable sur l'âme 4 avant qu'elle soit recouverte du liant. Par exemple, il a été mesuré qu'une induction magnétique rémanente de 1,2 mT en surface de l'âme 4 produit une induction magnétique rémanente de 0,1 mT en surface du fil 3 après que la couche de liant 8 ait été déposée. L'induction magnétique rémanente en surface est par exemple mesurée avec un appareil MAGSYS (Dortmund, Allemagne), Gaussmeter HGM 09 s, avec une sonde radiale HGM T 02 45 035 0. De préférence, la mesure est réalisée dans un chambre à l'abri des champs magnétiques environnant et en tenant compte du champ magnétique terrestre pour être capable de mesurer des champs magnétiques très faible.

De nombreux autres modes de réalisation sont possibles. Par exemple, l'âme 4 peut être formée de plusieurs brins entrelacés entre eux. De même, l'âme 4 peut être réalisée dans d'autres matériaux que des aciers. Par exemple, l'âme 4 peut aussi être réalisée dans un matériau diamagnétique ou paramagnétique.

Le revêtement 18 des particules abrasives n'est pas nécessairement un matériau conducteur.

Le grain 16 peut être réalisé dans de nombreux matériaux abrasifs différents. Par exemple, il peut être réalisé en SiC, en SiO₂, en WC, en Si₃N₄, en nitrure de bore, en CrO₂, ou en oxyde d'aluminium.

Le liant 8 peut aussi être réalisé dans un matériau autre qu'un métal. Par exemple, en variante, le liant est une résine.

Les différents dispositifs d'aimantation décrits ici peuvent être combinés ensemble. En particulier, le dispositif 104 peut être combiné avec l'un quelconque des autres dispositifs d'aimantation décrits précédemment de manière à combiner une aimantation permanente axiale avec une aimantation radiale de l'âme centrale.

Plusieurs dispositifs 300 peuvent être répartis autour de l'âme 4 pour améliorer l'uniformité de l'aimantation autour de cette âme 4.

Le dispositif 104 ou tout dispositif apte à aimanter l'âme 4 dans sa direction longitudinale peut être adapté pour créer une alternance de pôles sud et de pôles nord le long de la longueur du fil comme décrit en référence à la figure 22. Par exemple, une telle alternance du sens de l'aimantation de l'âme 4 peut être obtenue en inversant à intervalles prédéterminés la direction du courant continu qui circule dans la bobine 106 du dispositif 104. On obtient alors, le long de la longueur de l'âme 4, une aimantation longitudinale dont la direction alterne entre deux sens opposés. Pour créer une alternance de pôles sud et nord, il est aussi possible d'adapter le dispositif 26 pour que la source de courant 84 inverse régulièrement le sens du courant continu qu'elle fait circuler dans la bobine 80. D'autres méthodes sont possibles pour créer des discontinuités dans l'aimantation longitudinale de l'âme 4. Par exemple, dans un autre mode de réalisation, des discontinuités mécaniques, telles que des rayures ou des nervures, sont réalisées sur la surface de l'âme 4. Typiquement la profondeur des rayures ou la hauteur des nervures est supérieure à 5 % ou 10 % ou 20 % du diamètre de l'âme 4. Il a été mesuré par les déposants que ces rayures ou nervures engendrent elles aussi des discontinuités dans l'aimantation de l'âme 4 et donc des pics correspondant d'induction magnétique à l'emplacement de ces discontinuités. Dans ce dernier mode de réalisation, la direction du champ magnétique utilisé pour aimanter longitudinalement l'âme 4 peut être constante. Les discontinuités mécaniques peuvent aussi prendre d'autres formes que des rainures ou des nervures. Par exemple, une discontinuité peut être créée par des impuretés ou similaires implantées localement dans l'âme.

Dans une variante non protégée ici, le dispositif 26 peut être omis. Dans ce cas, l'âme centrale n'est pas aimantée de façon permanente. L'attraction des particules abrasives vers l'âme centrale est alors provoquée soit par le dispositif 44 soit par un dispositif d'aimantation tel que le dispositif 114 soit encore par l'aimantation permanente des particules abrasives. En particulier, le dispositif d'aimantation 44 peut être utilisé seul.

Dans les dispositifs d'aimantation, tels que les dispositifs 26 et 90, les bobines peuvent être remplacées par des aimants permanents.

Dans une variante simplifiée, le dispositif 44 comporte une seule source de champ magnétique. Dans ce cas, cette source de champ magnétique crée uniquement un moment magnétique dans l'âme centrale dont la direction est toujours la même. L'actionneur 118 peut alors être omis. Dans ce dernier mode de réalisation, de préférence, l'âme centrale est alors entraînée en rotation sur elle-même pour uniformiser la répartition des particules abrasives sur sa périphérie.

En variante le dispositif 44 comporte plusieurs sources immobiles de champ magnétique disposées les une après les autres dans le sens F. Une première et une seconde de ces sources sont agencées pour créer dans l'âme 4 les moments magnétiques, respectivement, de directions M1 et M2. Ainsi, au fur et à mesure que l'âme 4 avance dans le bain 36, celle-ci présente d'abord le moment magnétique de direction M1 lorsqu'elle est dans les lignes de champ de la première source puis le moment magnétique de direction M2 lorsqu'elle est dans les lignes de champ de la seconde source.

L'aimant 112 peut être remplacé par une source de champ magnétique qui varie au cours du temps. En effet, une fois que les particules abrasives ont été accrochées sur l'âme centrale, le champ magnétique de la source peut être arrêtée ou modifiée. Par exemple, la source alterne régulièrement entre un état où elle génère le champ magnétique et un état où elle ne génère pas de champ magnétique.

Lorsque le dispositif d'aimantation est le dispositif 114, il n'est pas nécessaire que l'âme centrale soit réalisée dans un matériau magnétique. Par exemple, l'âme 4 est en tungstène. En effet, le dispositif 114 permet d'attirer les particules abrasives sur une âme centrale en matériau non magnétique lorsque cette âme centrale est immergée dans le bain 36.

Le courant généré par le dispositif 114 n'est pas nécessairement continu. En variante, il varie au cours du temps. Par exemple, à intervalle régulier, le courant s'annule.

Les différents dispositifs d'aimantation décrits précédemment peuvent être activés uniquement par intermittence pour créer des sections de l'âme centrale aimantée de façon permanente alternées avec des sections de l'âme centrale dépourvue d'aimantation permanente. Ceci permet d'obtenir une alternance de plusieurs sections successives dans le sens de la longueur du fil, où chaque section a une densité de particules abrasives différente des sections qui la jouxtent immédiatement en amont et en aval. Par exemple, cela permet d'alterner des sections dont la densité en particules abrasives est au moins dix fois supérieure à la densité de particules des sections jouxtant celles-ci.

Le passage dans le second bain 52 d'électrolyte pour déposer une couche supplémentaire de liant peut être omis si la couche 10 de liant déposée dans le premier bain 36 est suffisamment épaisse pour maintenir de façon adéquate les particules abrasives sur l'âme centrale.

Dans une autre variante, les dépôts des couches 10 et 12 ne sont pas réalisés immédiatement l'un après l'autre. Par exemple, la couche 10 est d'abord déposée sur toute la longueur de l'âme centrale, puis l'âme centrale ainsi revêtue uniquement de la couche 10 est enroulée sur une bobine puis transportée vers un autre bain d'électrolyte. Ensuite, la couche 12 est déposée sur toute la longueur de l'âme centrale par une autre machine. Ainsi, le dépôt des couches 10 et 12 peut être réalisé à des vitesses différentes.

Dans un autre mode de réalisation, les étapes de dépôts de particules abrasives et de liants sont réitérées chacune plusieurs fois de manière à obtenir un empilement de couches concentriques autour de l'âme centrale 4, chaque couche étant formée de particules abrasives et de liants. Le fil multicouches ainsi obtenu est plus résistant à l'usure.

Le dispositif pour faire circuler l'électrolyte dans le bain 36 peut être réalisé à l'aide d'une hélice comportant des pales entraînées en rotation autour d'un axe. Ces pales ont typiquement chacune une surface supérieure à 1 cm². De préférence, l'hélice est placée dans le ou les conduits de retour.

Dans un mode de réalisation simplifié, les buses 140 de projection sont omises. Dans ce cas, on conserve simplement une circulation du bain 36 à la même vitesse que l'âme centrale.

Dans un autre mode de réalisation, chaque buse 140 est formée par un tube au moins deux fois plus long que large. Cela permet d'améliorer la directivité du jet de bain 36. Les buses peuvent être orientées de manière à ce que le jet présente aussi une composante de vitesse non nulle dans la direction X. Par exemple, les buses peuvent être inclinées par rapport à la direction de l'âme 4 d'un angle supérieur à 95° ou inférieur à 85°. Orienter les buses avec une composante dans la direction X permet d'éviter un gradient de la vitesse des particules juste au niveau des buses et de répartir les particules sur toute la longueur de la partie de l'âme 4 immergée dans le bain.

Dans un mode de réalisation simplifié, le dispositif 132 pour faire circuler le bain 36 à la même vitesse que l'âme centrale 4 est omis.

Le dépôt du liant sur l'âme centrale peut être réalisé par d'autres moyens que par électrolyse. Par exemple, l'électrolyse est remplacée par un dépôt chimique de liant sans électrolyse. Un tel dépôt est connu sur les termes français de « nickel chimique » et anglais de « electroless ». Par exemple, on emploie à cet effet une molécule réductrice telle que l'hypophosphite de sodium (Na(H₂PO₂)).

Lorsque le liant est déposé par d'autres méthodes que l'électrolyse, celui-ci peut être réalisé dans un matériau non conducteur tel qu'une résine isolante.

Le dépôt des particules abrasives peut être aussi réalisé en dehors du bain d'électrolyte. Par exemple, l'âme centrale est aimantée de façon permanente puis les particules abrasives sont pulvérisées sur l'âme centrale avant que celle-ci ne soit immergée dans le bain d'électrolyte. Les particules abrasives sont alors retenues par aimantation sur l'âme centrale. L'âme centrale ainsi revêtue est ensuite immergée dans un bain d'électrolyte. Dans ce cas, le bain d'électrolyte ne contient pas nécessairement de particules abrasives.

Ce qui a été décrit précédemment s'applique également au cas où l'âme centrale ne se déplace pas lorsqu'elle est immergée dans le bain d'électrolyte. Par exemple, l'âme centrale peut être une boucle fermée. Dans ce cas, la totalité de la boucle est immergée dans le bain en une seule fois. L'âme centrale est alors immobile dans ce bain d'électrolyte.

Enfin, plusieurs fils peuvent être fabriqués en parallèle. Dans ce cas, plusieurs âmes centrales sont simultanément immergées en parallèle dans les mêmes bains d'électrolyte précédemment décrits et chaque âme se déplace parallèlement aux autres. Ceci permet notamment de réduire le nombre d'équipements nécessaires pour fabriquer le fil.

## Revendications

1. Procédé de fabrication d'un fil de découpe formé de particules abrasives maintenues sur une âme centrale par un liant, ce procédé comportant :
a) le dépôt (204 ; 222) de particules abrasives magnétiques sur l'âme centrale, chaque particule abrasive magnétique comportant un matériau magnétique dont la perméabilité relative est supérieure à 50, ce matériau magnétique représentant au moins 1 % du volume de la particule abrasive magnétique, une interaction magnétique étant créée (202), pendant cette étape a), entre l'âme centrale et les particules abrasives magnétiques pour attirer les particules abrasives magnétiques sur l'âme centrale, et
b) le dépôt (204, 208 ; 208) du liant sur l'âme centrale pour maintenir les particules abrasives fixées sur cette âme centrale,
**caractérisé en ce que**, avant l'étape a), l'âme centrale présente à sa surface au moins deux pôles sud et deux pôles nord répartis en alternance le long de sa périphérie et/ou le long de sa longueur.

2. Procédé selon la revendication 1, dans lequel, avant l'étape a), l'âme centrale présente à sa surface, au niveau de chaque pôle sud et de chaque pôle nord, une induction magnétique permanente supérieure à 0,1 mT et, de préférence supérieure à 0,4 mT, dans une direction radiale de l'âme centrale.

3. Procédé selon l'une quelconque des revendications précédentes, dans lequel, avant l'étape a), l'âme centrale présente une induction magnétique permanente d'au moins 1 mT parallèle, à plus ou moins 10° près, à une direction longitudinale de l'âme.

4. Procédé selon la revendication 3, dans lequel le procédé comprend
- l'application (202), avant l'étape a), d'un premier champ magnétique externe pour aimanter l'âme centrale, l'âme centrale ainsi aimantée présentant un premier moment magnétique aligné sur la direction longitudinale, puis
- l'application (202), toujours avant l'étape a), d'un second champ magnétique externe pour aimanter l'âme centrale, l'âme centrale ainsi aimantée présentant alors un second moment magnétique parallèle au premier moment magnétique et de sens opposé.

5. Procédé selon l'une quelconque des revendications précédentes, dans lequel les étapes a) et b) sont réitérées au moins une seconde fois après une première itération de ces étapes a) et b).

6. Procédé selon l'une quelconque des revendications précédentes, dans lequel, lors de l'étape b), le procédé comporte :
- le déplacement (200, 204) de l'âme centrale, dans sa direction longitudinale, à l'intérieur d'un bain d'électrolyte contenant des ions du liant, et
- l'application (204) d'une différence de potentiels entre l'âme en déplacement et une électrode de travail pour provoquer le dépôt par électrolyse du liant sur l'âme centrale.

7. Appareil de fabrication d'un fil de découpe formé de particules abrasives maintenues sur une âme centrale par un liant, cet appareil comportant :
- une unité (28, 34, 36, 40) de dépôt des particules abrasives magnétiques sur l'âme centrale, chaque particule abrasive magnétique comportant un matériau magnétique dont la perméabilité relative est supérieure à 50, ce matériau magnétique représentant au moins 1 % du volume de la particule abrasive magnétique, et
- une unité (28, 34, 36, 40, 50, 52, 56, 54) de dépôt du liant sur l'âme centrale pour maintenir les particules abrasives fixées sur l'âme centrale,
**caractérisé en ce que** l'appareil comporte un dispositif (90 ; 300) apte à aimanter l'âme centrale de manière à ce qu'elle présente, avant son passage dans l'unité de dépôt des particules abrasives, simultanément à sa surface au moins deux pôles sud et deux pôles nord répartis en alternance le long de sa périphérie et/ou le long de sa longueur pour attirer les particules abrasives magnétiques sur l'âme centrale lors du dépôt des particules abrasives magnétiques sur cette âme centrale.

8. Fil de découpe comportant :
- une âme centrale (4),
- des particules abrasives magnétiques (6 ; 170 ; 176 ; 180 ; 190) maintenues sur l'âme centrale par un liant (8),
**caractérisé en ce que** l'âme centrale présente à sa surface au moins deux pôles sud et deux pôles nord répartis en alternance et à intervalles prédéterminés le long de sa périphérie ou le long de sa longueur.

9. Fil selon la revendication 8, dans lequel l'âme centrale (4) présente une aimantation rémanente supérieure à 5 mT.

10. Fil selon l'une quelconque des revendications 8 à 9, dans lequel au moins 10% des particules abrasives magnétiques sont oblongues et présentent une plus grande longueur le long d'un grand axe et, pour 80% de ces particules abrasives magnétiques oblongues, l'angle entre le grand axe de la particule abrasive magnétique et la normale à la surface de l'âme centrale passant par cette particule est compris entre 0° et 70°.

11. Fil selon l'une quelconque des revendications 8 à 10, dans lequel, pour 85% des particules abrasives magnétiques, la distance la plus courte entre cette particule abrasive magnétique et la surface de l'âme centrale est égale à une constante à plus ou moins 1 µm près.

## Patentansprüche

1. Verfahren zur Herstellung eines Schneiddrahtes, der aus Schleifpartikeln gebildet ist, die durch ein Bindemittel auf einem mittleren Kern gehalten werden, wobei das Verfahren Folgendes aufweist:
a) das Aufbringen (204; 222) von magnetischen Schleifpartikeln auf den mittleren Kern, wobei jedes magnetische Schleifpartikel ein magnetisches Material aufweist, dessen relative Permeabilität größer als 50 ist, wobei dieses magnetische Material mindestens 1 % des Volumens des magnetischen Schleifpartikels ausmacht, wobei eine magnetische Wechselwirkung während dieses Schrittes a) zwischen dem mittleren Kern und den magnetischen Schleifpartikeln erzeugt wird (202), um die magnetischen Schleifpartikel auf den mittleren Kern anzuziehen, und
b) das Aufbringen (204, 208; 208) des Bindemittels auf den mittleren Kern, um die Schleifpartikel auf diesem mittleren Kern befestigt zu halten,
**dadurch gekennzeichnet, dass** der mittlere Kern vor dem Schritt a) an seiner Oberfläche mindestens zwei Süd- und zwei Nordpole aufweist, die abwechselnd längs seines Umfangs und/oder längs seiner Länge verteilt sind.

2. Verfahren nach Anspruch 1, wobei der mittlere Kern vor dem Schritt a) an seiner Oberfläche an jedem Süd- und jedem Nordpol eine permanente magnetische Flussdichte von über 0,1 mT und vorzugsweise von über 0,4 mT in einer radialen Richtung des mittleren Kerns aufweist.

3. Verfahren nach einem der vorhergehenden Ansprüche, wobei der mittlere Kern vor dem Schritt a) eine permanente magnetische Flussdichte von mindestens 1 mT aufweist, die etwa um mehr oder weniger als 10° parallel zu einer Längsrichtung des Kerns ist.

4. Verfahren nach Anspruch 3, wobei das Verfahren Folgendes aufweist:
- das Anlegen (202) vor dem Schritt a) eines ersten externen Magnetfeldes, um den mittleren Kern zu magnetisieren, wobei der auf diese Weise magnetisierte mittlere Kern ein erstes magnetisches Moment aufweist, das auf die Längsrichtung ausgerichtet ist, und dann
- das Anlegen (202), stets vor dem Schritt a), eines zweiten externen Magnetfeldes, um den mittleren Kern zu magnetisieren, wobei der auf diese Weise magnetisierte mittlere Kern dann ein zweites magnetisches Moment aufweist, das parallel zu dem ersten magnetischen Moment und von entgegengesetzter Richtung ist.

5. Verfahren nach einem der vorhergehenden Ansprüche, wobei die Schritte a) und b) mindestens ein zweites Mal nach einer ersten Wiederholung dieser Schritte a) und b) wiederholt werden.

6. Verfahren nach einem der vorhergehenden Ansprüche, wobei das Verfahren während des Schrittes b) Folgendes aufweist:
- das Verschieben (200, 204) des mittleren Kerns in seiner Längsrichtung in einem Elektrolytbad, das Ionen des Bindemittels enthält, und
- das Anlegen (204) einer Potentialdifferenz zwischen dem Kern, der verschoben wird, und einer Arbeitselektrode, um die galvanische Abscheidung von Bindemittel auf dem mittleren Kern zu bewirken.

7. Vorrichtung zur Herstellung eines Schneiddrahtes, der aus Schleifpartikeln gebildet ist, die durch ein Bindemittel auf einem mittleren Kern gehalten werden, wobei die Vorrichtung Folgendes aufweist:
- eine Einheit (28, 34, 36, 40) zum Abscheiden von magnetischen Schleifpartikeln auf den mittleren Kern, wobei jedes magnetische Schleifpartikel ein magnetisches Material aufweist, dessen relative Permeabilität größer als 50 ist, wobei dieses magnetische Material mindestens 1 % des Volumens des magnetischen Schleifpartikels ausmacht, und
- eine Einheit (28, 34, 36, 40, 50, 52, 56, 54) zum Abscheiden des Bindemittels auf den mittleren Kern, um die Schleifpartikel auf dem mittleren Kern befestigt zu halten,
**dadurch gekennzeichnet, dass** die Vorrichtung ein Gerät (90; 300) aufweist, das geeignet ist, den mittleren Kern derart zu magnetisieren, dass sie vor seinem Durchgang in der Einheit zum Abscheiden der Schleifpartikel gleichzeitig an seiner Oberfläche mindestens zwei Süd- und zwei Nordpole aufweist, die abwechselnd längs seines Umfangs und/oder längs seiner Länge verteilt sind, um die magnetischen Schleifpartikel während des Abscheidens der magnetischen Schleifpartikel auf den mittleren Kern auf diesen mittleren Kern anzuziehen.

8. Schneiddraht, umfassend:
- einen mittleren Kern (4),
- magnetische Schleifpartikel (6; 170; 176; 180; 190), die durch ein Bindemittel (8) auf dem mittleren Kern gehalten werden,
**dadurch gekennzeichnet, dass** der mittlere Kern an seiner Oberfläche mindestens zwei Süd- und zwei Nordpole aufweist, die abwechselnd und in vorbestimmten Intervallen längs seines Umfangs oder längs seiner Länge verteilt sind.

9. Draht nach Anspruch 8, wobei der mittlere Kern (4) eine magnetische Remanenz von über 5 mT aufweist.

10. Draht nach einem der Ansprüche 8 bis 9, wobei mindestens 10 % der magnetischen Schleifpartikel länglich sind und eine größere Länge entlang einer großen Achse aufweisen und für 80 % dieser länglichen magnetischen Schleifpartikel der Winkel zwischen der großen Achse des magnetischen Schleifpartikels und der Normalen an der Oberfläche des mittleren Kerns, die durch dieses Partikel läuft, zwischen 0° und 70° beträgt.

11. Draht nach einem der Ansprüche 8 bis 10, wobei für 85 % der magnetischen Schleifpartikel der kürzeste Abstand zwischen diesem magnetischen Schleifpartikel und der Oberfläche des mittleren Kerns gleich einer Konstante von etwa mehr oder weniger 1 µm ist.

## Claims

1. Process for manufacturing an abrasive wire formed by abrasive particles kept on a central core by a binder, this process comprising:
a) the deposition (204; 222) of magnetic abrasive particles on the central core, each magnetic abrasive particle comprising a magnetic material the relative permeability of which is higher than 50, this magnetic material representing at least 1% of the volume of the magnetic abrasive particle, a magnetic interaction being created (202), during this step a), between the central core and the abrasive particles, in order to attract the abrasive particles to the central core; and
b) the deposition (204, 208; 208) of the binder on the central core in order to keep the abrasive particles attached to this central core,
**characterized in that**, before step a), the central core has on its surface at least two south poles and two north poles distributed in alternation along its periphery and/or along its length.

2. Process according to Claim 1, in which, before step a), the central core has on its surface, at each south pole and each north pole, a permanent magnetic induction higher than 0.1 mT and, preferably higher than 0.4 mT, in a radial direction of the central core.

3. Process according to either one of the preceding claims, in which, before step a), the central core has a permanent magnetic induction of at least 1 mT parallel, to within plus or minus 10°, to a longitudinal direction of the core.

4. Process according to Claim 3, in which the process comprises:
- application (202), before step a), of a first external magnetic field in order to magnetize the central core, the central core thus magnetized having a first magnetic moment aligned with the longitudinal direction, then
- application (202), again before step a), of a second external magnetic field in order to magnetize the central core, the central core thus magnetized then having a second magnetic moment parallel with the first magnetic moment but in the opposite direction.

5. Process according to any one of the preceding claims, in which steps a) and b) are repeated at least one second time after a first iteration of these steps a) and b).

6. Process according to any one of the preceding claims, in which, during step b), the process comprises:
- movement (200, 204) of the central core, in its longitudinal direction, inside a bath of electrolyte containing ions of the binder; and
- application (204) of a potential difference between the moving core and a working electrode in order to cause the deposition by electrolysis of the binder on the central core.

7. Apparatus for manufacturing an abrasive wire formed by abrasive particles kept on a central core by a binder, this apparatus comprising:
- a unit (28, 34, 36, 40) for depositing magnetic abrasive particles on the central core, each magnetic abrasive particle comprising a magnetic material the relative permeability of which is higher than 50, this magnetic material representing at least 1% of the volume of the magnetic abrasive particle; and
- a unit (28, 34, 36, 40, 50, 52, 56, 54) for depositing the binder on the central core in order to keep the abrasive particles attached to the central core,
**characterized in that** the apparatus comprises a device (90) able to magnetize the central core so that it has, before it passes into the unit for depositing abrasive particles, on its surface simultaneously at least two south poles and two north poles distributed in alternation along its periphery and/or along its length in order to attract the magnetic abrasive particles to the central core during the deposition of the magnetic abrasive particles on this central core.

8. Abrasive wire comprising:
- a central core (4);
- magnetic abrasive particles (6; 170; 176; 180; 190) kept on the central core by a binder (8),
**characterized in that** the central core has on its surface at least two south poles and two north poles distributed in alternation and at predetermined intervals along its periphery or along its length.

9. Wire according to Claim 8, in which the central core (4) has a remanent magnetization higher than 5 mT.

10. Wire according to either one of Claims 8 and 9, in which at least 10% of the magnetic abrasive particles are oblong and are greater in length along a large axis and, for 80% of these oblong magnetic abrasive particles, the angle between the large axis of the magnetic abrasive particle and the normal to the surface of the central core passing through this particle is between 0° and 70°.

11. Wire according to any one of claims 8 to 10, in which, for 85% of the magnetic abrasive particles, the shortest distance between this magnetic abrasive particle and the surface of the central core is equal to a constant to within plus or minus 1 µm.
